# EUROPEAN PATENT APPLICATION

(11) **EP 4 574 455 A1**
(43) Date of publication of application: **25.06.2025**
(21) Application number: 24219506.3
(22) Date of filing: 12.12.2024
(51) Int. Cl.: B60C 5/14, B60C 19/00, B60C 23/00

(54) **BAFFLE LINER FOR INCORPORATION TO AN INNER LINER OF A TUBELESS PNEUMATIC TYRE**

(30) Priority: 18.12.2023 GB 202319430
(71) Applicant: Harding, Robert, Milton Keynes MK6 2QU (GB)
(72) Inventor: Harding, Robert, Milton Keynes MK6 2QU (GB)
(74) Representative: Brown, Alexander Edward

(57) **Abstract**

A baffle liner for attachment to an inner liner of a tyre, the baffle liner comprising at least one sheet of material, and at least one surface formation. The surface formation reduces the effects of a shock event external to the tyre by dissipating shockwaves produced by the shock event and by modulating air pressure spikes at the point of impact.

## Description

### Technical Field

The present invention relates to baffle liners for attachment to an inner liner of a tyre post vulcanisation, specifically for pneumatic tyres for motor vehicles and bicycles.

### Background

Tyres on vehicles are of two general types: solid or pneumatic. Pneumatic tyres are filled with a gas (generally air but in some circumstances, such as track racing, the inert gas is nitrogen) which provides suspension to the bicycle or motor vehicle. A robust suspension system not only provides a more comfortable ride for passengers but acts as an essential part of the steering system, allowing the wheels to be directed accurately by the driver. Pneumatic tyres form the most basic but fundamental part of a vehicle suspension system. On bicycles without mechanical suspension systems, pneumatic tyres (with the exception of a sprung saddle) are the only means of suspension. Although solid tyres have low drag on completely flat surfaces, when rough surfaces are encountered (as on normal road networks) solid tyres have difficulty coping with the deformities of the road, increasing vibration feedback and losing grip and directional control for the driver/rider. Pneumatic tyres are able to flex over rough surfaces and reduce vibration feedback and maintain directional control.

Tyres are generally made of a rubber substance, with a number of other ingredients added such as sulphur and silica to provide rigidity and durability. Some wheels, particularly on children's toys, have foam filled tyres and foam has been used in some expensive vehicle tyres to reduce road noise and provide the highest levels of comfort and mitigate the effects of punctures, but the addition of foam to tyres is costly and adds significant weight to the tyre. There have also been developments in spoke design to enable solid tyres to be used on a flexible wheel on certain agricultural or industrial vehicles, for example the Michelin Acorus technology and its Tweel^{™} wheel. However, such wheels are formed using significant amounts of carbon based products and the design generally favours use on slower moving vehicles, likely due to the potential for higher lateral stresses at higher speeds.

Although many bicycle tyres still use inner tubes which are inflated to form the overall rigidity of the tyre, high end and racing bicycle tyres are generally tubeless. Modern motor vehicle tyres do not have inner tubes, air is pumped directly into the tyre via a valve, increasing the air pressure within the tyre. Such tyres are referred to as being 'tubeless'. The air compresses the tyre bead against the wheel rim and the air is sealed inside the tyre. A form of inner tube has been used on NASCAR ^{™} racing vehicles and is referred to as an inner liner but this is essentially one tyre within another with both inner and outer tyre having air sealed by compression against the wheel rim, each having a separate valve with the inner tyre inflated to a higher pressure than the outer section, the purpose of which is to maintain overall high pressures but also to act as a failsafe in the event of a high speed tyre blowout.

In recent years, wheels on motor vehicles have tended to become larger in diameter so that irregularities in road surfaces cause less vibration to the vehicle. However, this is often achieved by reducing the size of the tyre sidewall, reducing the amount of air in the tyre and relying more heavily on the mechanical and computerised suspension systems with less reliance being put on the tyre since the tyres are considered less controllable than the mechanical and computerised parts of the suspension system.

Due to increasing concerns regarding the sustainability of the environment, vehicle and tyre manufacturers are required to consider the energy efficiency of their products. Tyres are rated according to their energy efficiency and how much fuel is required to move a vehicle a specified distance vis-a-vis energy input. Electrically powered vehicles (EVs) in particular, which are often heavier than vehicles with internal combustion engines (ICR), are using harder and narrower tyres which provide lower drag and increased energy efficiency. However, harder narrower tyres invariably have less grip and poorer handling characteristics than softer, wider tyres.

Baffles are used to reduce pressure differentials or to dissipate heat, for example, baffles are used in vehicle fuel tanks and on large ocean-going tankers to regulate the movement of fluids on the ship or vehicle to be more in harmony with the external sea or air pressures. Baffles are used on rail networks, on racing cars, on aircraft. Baffle structures are currently used within rail tunnel systems. In tunnels used by high-speed trains, pressure waves are formed in front of the train, increasing opposing air pressure which requires greater power to overcome and increased friction (known as the 'Piston Effect'). By building vents and baffles which dissipate air through tunnels, high speed trains are able to travel at higher speeds.

It is therefore the object of the present invention to provide a baffle liner for attachment to an inner liner of a tyre which alleviates or overcomes one or more of the problems mentioned above, in particular, the mitigation of shock events and regularisation of pressure spikes within the pneumatic tyre at a lower cost than current mechanical or computerised suspension enhancements.

### Summary of the Invention

In accordance with embodiments of the invention, there is provided a baffle liner for attachment to an inner liner of a tyre, the baffle liner comprising at least one sheet of material, and at least one surface formation. The at least one surface formation is configured to reduce the effects of a shock event external to the tyre by dissipating shockwaves produced by the shock event and by modulating air pressure spikes at the point of impact.

The baffle liner may extend circumferentially along the inner liner.

The sheet of material may comprise two primary adhesion regions extending circumferentially along the inner liner. The primary adhesion regions may be configured to adhere the sheet of material to the inner liner.

The sheet of material may comprise two opposing edges extending circumferentially along the inner liner. The primary adhesion regions may be located along the two opposing edges of the sheet of material.

The sheet of material may comprise at least one secondary adhesion region extending between the primary adhesion regions. The secondary adhesion regions may be configured to adhere the sheet of material to the inner liner, such that at least one panel is defined between the primary and secondary adhesion regions.

The at least one surface formation may be at least one vent located on the at least one panel.

The at least one panel may comprise a first side vent located adjacent to a first primary adhesion region and a second side vent located adjacent to a second primary adhesion region. The panel may comprise the at least one vent in a region defined between the first and second side vent.

The at least one secondary adhesion region may extend perpendicular to the primary adhesion regions.

The sheet of material may comprise at least one blister. The one blister comprises a casing defining a cavity protruding radially inwards from the inner liner. The at least one surface formation may be at least one vent located on the casing.

The sheet of material surrounding the at least one blister may be adhered to the inner liner.

The at least one blister may comprise a reinforcing region located at a boundary between the casing and the sheet of material adhered to the inner liner.

The baffle liner may comprise a plurality of blisters and the plurality blisters may be arranged such that they are spaced from adjacent blisters along a direction defined by the circumference of the inner liner.

The plurality of blisters may be regularly spaced along the direction defined by the circumference of the inner liner.

The baffle liner may comprise at least two sheets of material, and each sheet of material may comprise at least three adhesion points configured to adhere the sheet of material to the inner liner. The at least on surface feature may be apertures defined between the sheets of material.

The sheets of material may comprise a front face and side edges. The at least three adhesion points may be located at the side edges.

The at least two sheets of material may comprise at least four corners. The adhesion points may be located at each of the corners.

The at least two sheets of material may be trapezoidal in shape.

The sheet of material may comprise a trailing edge and a leading edge opposite to and spaced apart from the trailing edge along a direction defined by the circumference of the inner liner. The trailing edge of the sheet of material may overlap with the leading edge of the adjacent sheet of material.

The at least one surface features may be vents located in the sheet of material.

The vents may comprise a vent hole and a reinforcing strip located around the vent hole.

The vents may comprise a reinforcing strip located at a boundary between the vents and the sheet of material.

The sheet of material may comprise a plurality of vents, and the plurality of vents may be arranged in an irregular array.

The sheet of material may comprise a plurality of vents, and the plurality of vents may be arranged in an irregular array.

The sheet of material may comprise a plurality of vents, and the plurality of vents may be differently sized.

The sheet of material may be in the form of a tube and the at least one surface features may be incisions in the tube.

The at least one surface feature may be in the form of a flexible sheet extending centripetally towards the centre of the tyre.

The sheet of material may be formed from a fabric material, preferably Kevlar, rubberised canvas or a flexible polyethylene based material.

### Brief Description of the Drawings

**Figure 1** shows a cross sectional schematic view of a tyre and its components.
**Figure 2a** shows a cross sectional schematic view of a tyre comprising a baffle liner according to an embodiment of the invention.
**Figure 2b** shows a shows a cross sectional schematic view of a tyre comprising a baffle liner comprising a vent according to an embodiment of the invention.
**Figure 3** shows a schematic of the surface structure of the baffle liner according to a first embodiment.
**Figure 4** shows a schematic of the surface structure of the baffle liner according to a second embodiment.
**Figure 5** shows a schematic of the surface structure of the baffle liner according to a third embodiment.
**Figure 6** shows a schematic of the surface structure of the baffle liner according to a fourth embodiment.
**Figure 7** shows a perspective view of a baffle liner according to a fifth embodiment.
**Figure 8** shows a perspective cross-sectional view of baffle liner according to a sixth embodiment.

### Detailed Description

Baffles have not been used within pneumatic tyres to regulate pressure differentials or mitigate against shockwaves. This invention is for a new device to be incorporated into current pneumatic tyre designs, a device which is able to regulate air movements and shockwaves within the tyre. This new device is an inner liner for the tyre which incorporates baffles to regulate shock waves and changing pressures within the air space of the tyre. This new device is termed a baffle liner and it allows for enhanced levels of controllability of the air within the tyre. Incorporating a baffle liner device into a pneumatic tyre enables the lower rolling resistance to be maintained by regularising pressure spikes and mitigating the effects of shock waves from external shock forces which can cause the condition of 'jounce', a jump/bounce of the vehicle encountered on hitting such obstructions as potholes or road debris. The baffle liner thus incorporates the benefits of solid wheels with those of pneumatic tyres.

As well as regularising pressure within the tyre, there will also be an element of structural bolstering with the incorporation of additional lightweight material inside the tyre, reducing the effects of lateral forces.

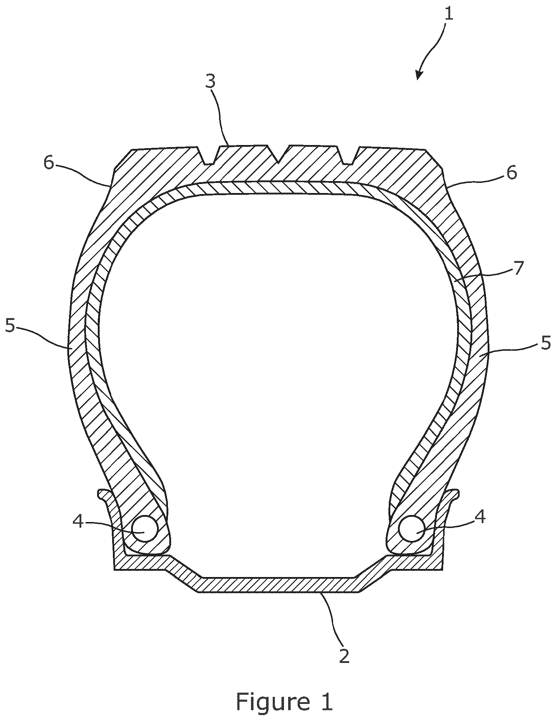

Figure 1 shows a schematic view of a cross section of a known tyre 1, wherein the tyre 1 is configured to be fixed to a rim 2 of a wheel. The tyre 1 comprises treads 3 configured to contact the road surface, beads 4 configured to secure the tyre 1 to the rim 2, sidewalls 5 extending between the beads 4 and the treads 3, and a shoulder 6 located between the treads 3 and the sidewalls 5. The tyre 1 further comprises an inner liner 7 bonded to the interior of the treads 3, sidewalls 4 and shoulders 6 of the tyre 1.

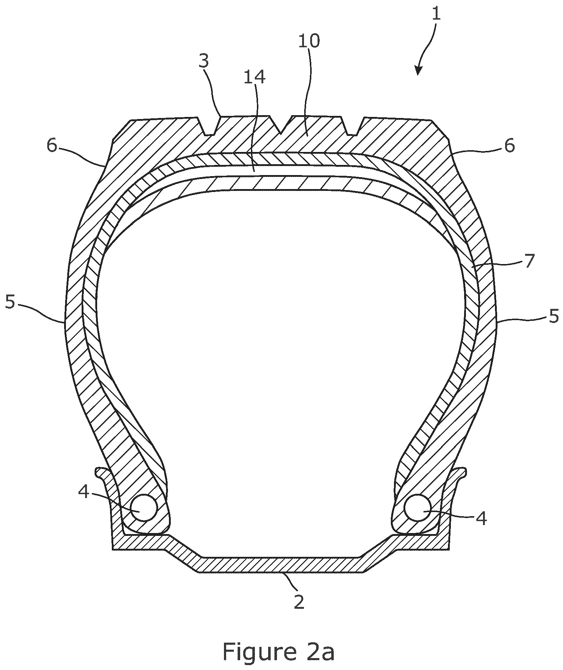

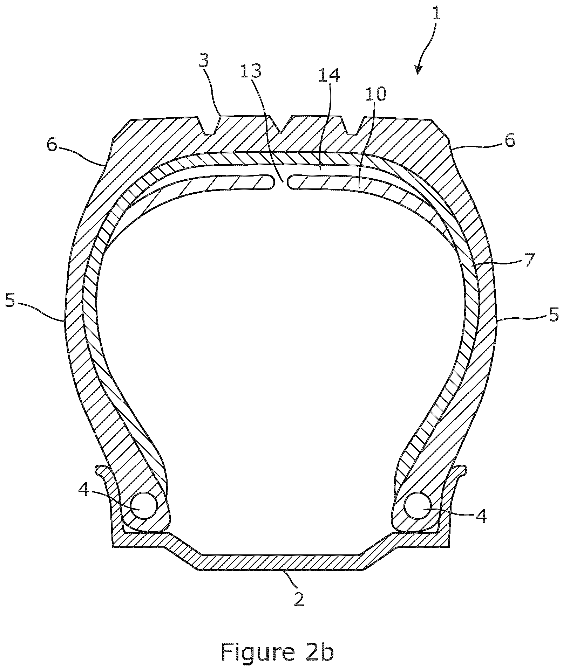

Figure 2a shows a schematic view of a cross section of a tyre, which retains the same reference numerals as the known tyre 1 shown in figure 1. Figure 2 furthers shows the tyre 1 comprising a baffle liner 10 according to an embodiment of the invention, whereby at least a portion of the baffle liner 10 is secured to the inner liner such that a cavity of air 14 can be located between the baffle liner 10 and the inner liner 7.

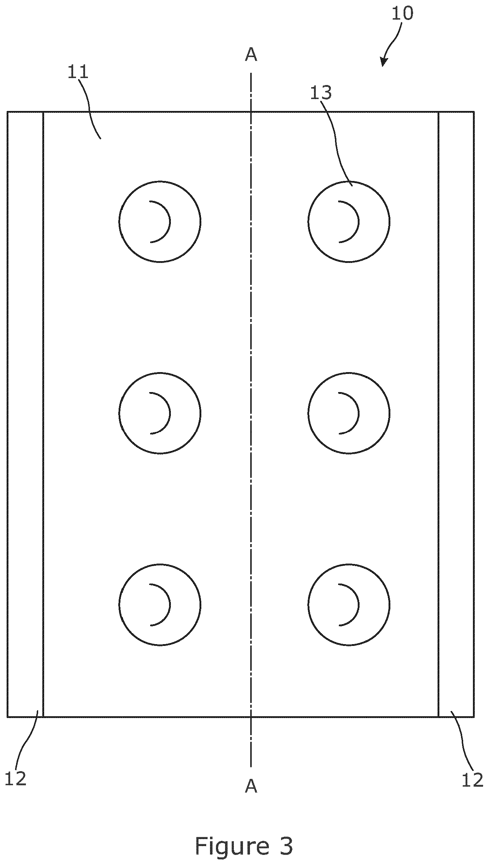

Figure 2b shows a schematic view of a cross section of a tyre, comprising a baffle liner 10 according to an embodiment of the invention whereby the baffle liner 10 comprises a vent 13, and the cross section of the tyre is taken such that the vent 13 is now visible. The vents 13 will be described in further detail in reference to Figures 3 to 6.

Figure 3 shows a schematic of the surface structure of a baffle liner 10 according to a first embodiment and further showing a longitudinal axis A-A of the baffle liner 10. The baffle liner 10 is intended to be secured to the inner liner 7 of the tyre 1 such that the longitudinal axis A-A of the baffle liner 7 is aligned with the circumference of the tyre 1. The baffle liner 10 is configured to be adjacent to the internal surface of the inner liner 7, specifically in the region of the inner liner 7 which is bonded to the interior of the treads 3 and the shoulders 6.

As shown in Figure 3, the baffle liner 10 comprises an elongated sheet of material comprising a carcass region 11 not adhered to the inner liner 7, and two adhesion regions 12 disposed on opposing edges of the liner carcass 11 which extend circumferentially around the inner liner 7, wherein the two adhesion regions 12 are parallel to one another and are configured to adhere the baffle liner 10 to the inner liner 7.

In alternative embodiments intended within the scope of the present invention, the adhesion regions are not located at the edge of the carcass but may be located spaced from the edges of the carcass, such that there is a portion of the sheet of material present on both sides of the adhesion regions. Further, embodiments whereby the adhesion regions are not parallel to the longitudinal axis A-A, or embodiments whereby the adhesion regions are not parallel to one another are too considered within the scope of the present invention. Also intended within the scope of the invention are embodiments whereby the sheet of material comprises more than two adhesion regions.

The liner carcass 11 comprises an array of vents 13, whereby the vents 13 are configured to assist in controlling the internal tyre pressure in response to a shock event external to the tyre. In Figure 3, the vents 13 are arranged in a regular array, although it is to be appreciated that alternative vent 13 patterns are intended within the scope of the present invention. Further intended within the scope of the present invention are baffle liners comprising irregular vent patterns, which advantageously mitigates against random and variable road conditions and encourages free flowing air when the road conditions change. In Figure 3, the vents 13 are all equal in size, but in alternative embodiments intended within the scope of the present invention, the vents may be differently sized, which advantageously mitigates against random and variable road conditions and encourages free flowing air when the road conditions change.

The embodiment shown in Figure 3 is particularly advantageous for its simplified design and cheaper manufacturing costs.

The baffle liner 10 of Figure 3 is prevented from flattening against the inner liner 7 by selecting a sufficiently rigid material for the liner carcass 11 or by thickening the liner carcass 11 where it is adhered to the inner liner. This is so a cavity of air 14 is present when the tyre is in use.

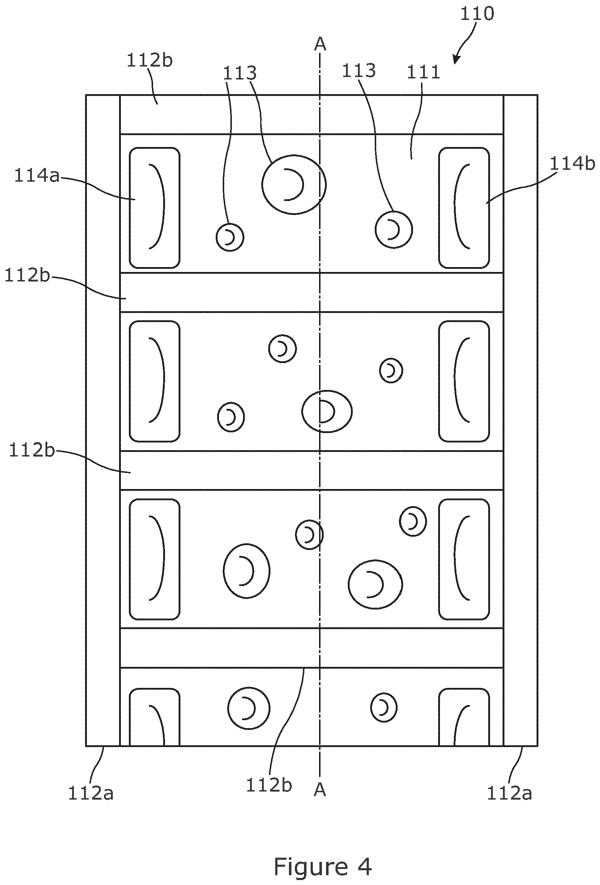

Figure 4 shows a schematic of the surface structure of a baffle liner 110 according to a second embodiment. The baffle liner 110 comprises a sheet of material comprising two primary adhesion regions 112a on the two sides of the baffle liner 110 which extend circumferentially along the circumferential axis A-A of the inner liner 7. The baffle liner 110 further comprises a plurality of secondary adhesion regions 112b extending between the primary adhesion regions 112a. In Figure 4, the secondary adhesion regions 112b extend between the primary adhesion regions 112a such that the secondary adhesion regions 112b are perpendicular to the longitudinal axis A-A of the baffle liner 110, although it is to be appreciated that secondary adhesion regions extending at any angle to the longitudinal axis A-A of the baffle liner 110 are intended within the scope of the present invention. The primary adhesion regions 112a and secondary adhesion regions 112b are configured to adhere the sheet of material to the inner liner 7.

The primary adhesion regions 112a and the secondary adhesion regions 112b define a plurality of panels 111 in the sheet of material, whereby the panels 111 are not adhered to the inner liner 7. Each panel 111 comprises a first side vent 114a located adjacent to one of the primary adhesion regions 112a and a second side vent 114b located adjacent to the other of the primary adhesion regions 112a. The panels 111 further comprise a plurality of vents 113 of varying shapes and sizes, whereby each panel can comprise a differing number of vents 113 and can comprise differently sized and arranged vents 113.

The baffle liner 110 of Figure 4 is prevented from flattening against the inner liner 7 by selecting a sufficiently rigid material for the panels 111 or by thickening the panels 111 adjacent to the adhesion regions 112a, 112b. this ensures a cavity of air is present between each of the panels 11 and the inner liner 7.

The embodiment shown in Figure 4 is particularly relevant for tyres with higher sidewalls, including those for vans and/or small trucks.

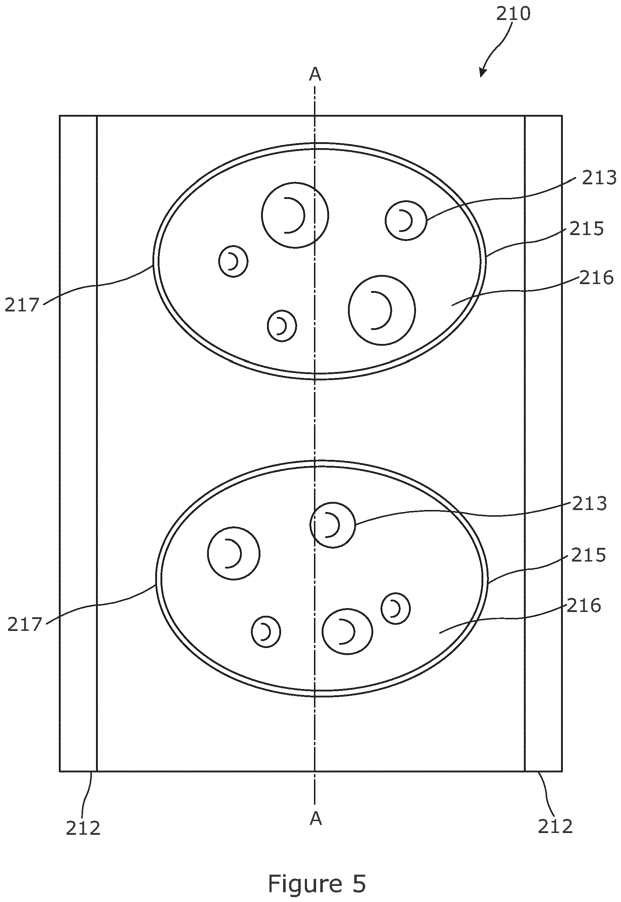

Figure 5 shows a schematic of the surface structure of a baffle liner 210 according to a third embodiment. The baffle liner 210 comprises a sheet of material, whereby the sheet of material comprises blisters 215 arranged in a line such that they are spaced from adjacent blisters 215 along the longitudinal axis A-A of the baffle liner 210. The blisters 215 comprise a casing 216 which is not adhered to the inner liner 7, whereby the casing 216 defines a cavity that protrudes radially inwards (in a centripetal direction) from the inner liner 7 towards the centre of the tyre. The remainder of the sheet of material surrounding the blisters 215 is adhered to the inner liner 7. The casing 216 of the cavity comprises a plurality of differently shaped and sized vents 213. It is to be appreciated that each casing 216 of each blister 215 can comprise a differing number of vents 213 and can comprise differently sized and arranged vents 213.

The baffle liner 210 of Figure 5 shows the sheet of material comprising primary adhesion regions 212 similar to those shown in previous embodiments. It is to be appreciated that the primary adhesion regions 212 are not essential, and embodiments whereby the baffle liner 210 comprises no primary adhesion regions 212 are considered within the scope of the present invention.

In the baffle liner 210 of Figure 5, the blisters 215 are generally oval shaped in cross section, although it is to be appreciated that other blister shapes are considered within the scope of the present invention, such as spherical or pyramidal. The blisters may advantageously be shaped such that the blister has a larger surface area closer to anticipated areas of stress and pressure. These areas of higher pressures may be the in the vicinity of the sides of the tyres that face outwardly from the vehicle.

In the baffle liner of Figure 5, the blisters 215 are arranged such that they are symmetrical about the longitudinal axis A-A. Additionally intended within the scope of the invention are different arrangements of blisters. For example, the blisters may be arranged asymmetrically about the longitudinal axis A-A, or the blisters may be randomly arranged, or there may be a plurality of blister pairs, whereby the blisters within a blister pair are spaced from another in a direction perpendicular to the longitudinal direction A-A, and the blister pairs are spaced from other blister pairs in the longitudinal direction A-A.

In Figure 5, there is a boundary 217 defined between the casing 216 and the surrounding sheet of material. In some embodiments, the blister 215 comprises a reinforcing region located at the boundaries 217, whereby the reinforcing region is intended to be a panel or patch of any other material mechanically or otherwise attached in the region of the boundary 217 to strengthen the region of the boundary 217 such that the blister 215 can remain secured to the sheet of material for a prolonged period of time.

The blisters 215 of the baffle liner 210 of Figure 5 are prevented from flattening against the inner liner 7 by providing rigidity to the material of the blisters which can be achieved from the way in which the blister 215 was moulded or the way in which the remainder of the baffle liner 210 is adhered to the inner liner 7. Alternatively, the choice of material or thickness may provide rigidity to the blisters 215.

The embodiment shown in Figure 5 is particularly suitable for low profile tyres for high performance tyres.

The embodiments shown in Figures 3 to 5 are provided as a flexible sheet with a cavity of air between the sheet, but it is to be appreciated that in alternative embodiments, the configurations shown may be incorporated as a flexible sheet that is formed into a tubular element which is located along the inner circumference of the inner liner 7. In these embodiments, one side of the tubular element faces and is adhered to the inner liner 7 and whereby the other side of the tubular element faces inwards of the tyre and which comprises the patterns of vents/blisters in the patterns shown in Figures 3 to 5 and the cavity of air is provided inside the tubular element (and no cavity of air is present between the tubular element and the inner liner 7).

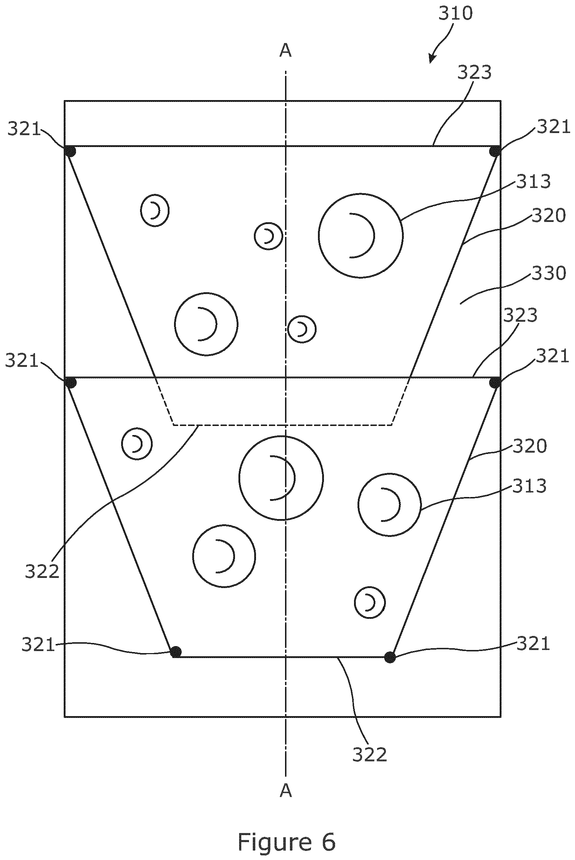

Figure 6 shows a schematic of the surface structure of a baffle liner 310 according to a fourth embodiment. The baffle liner 310 comprises a plurality of trapezoidal shaped sheets of material 320 arranged adjacent to one another along the longitudinal axis A-A (although only two sheets of material are shown in Figure 6 for simplicity of the drawing). The trapezoidal sheets of material 320 comprise adhesion points 321 at the four vertices of the trapezoidal sheets of material 320, whereby the adhesion points 321 are configured to adhere the trapezoidal sheets of material 320 to the inner liner 7. The remainder of the sheet of material 320 is not adhered to the inner liner 7. In this configuration, a plurality of apertures 330 are formed between the sheets of material 320 The trapezoidal sheets of material 320 may further comprise a plurality of differently shaped and sized vents 313. It is to be appreciated that each trapezoidal sheet of material 320 can comprise a differing number of vents 313 and can comprise differently sized and arranged vents 313.

The trapezoidal shaped sheets of material 320 comprise a leading edge 322 and a trailing edge 323 opposite to and spaced apart from the leading edge 322. The trapezoidal shaped sheets of material 320 are arranged such that the trailing edge 323 of a trapezoidal shaped sheet of material 320 overlaps the leading edge 322 of the adjacent trapezoidal shaped sheet of material 320, as shown in Figure 6 by the dashed outline of the trapezoidal sheet of material 320 which has its leading edge 322 overlapped by the adjacent trailing edge 323. It is to be appreciated that in other embodiments intended within the scope of the invention, the sheets of material may have varying degrees of overlapping regions, or there may be no overlapping between the leading edge and trailing edge of adjacent sheets of material.

In the embodiment shown in Figure 6, the sheets of material are trapezoidal in shape, but it is to be appreciated that other shapes of the sheet of material are intended within the scope of the present invention. The sheets of material can be described as comprising a front face and side edges and, for example, may be triangular such that there are only three adhesion points at the vertices of each sheet of material. It is further to be appreciated that the adhesion points do not need to be at the vertices of the sheets of material and may be located along the side edges of the sheet of material or in the vicinity of the side edges.

The baffle liner 310 of Figure 6 may comprise primary adhesion regions similar to those shown in previous embodiments. The primary adhesion regions may be configured to adhere a portion of the corner of the trapezoidal sheets of material 320 to the inner liner. It is to be appreciated that the primary adhesion regions are not essential.

The adhesion points 321 are positioned along the inner liner 7 and the shape of the trapezoidal shaped sheets 320 are chosen such that the baffle liner 310 shown in Figure 6 does not flatten against the inner liner 7.

The embodiment shown in Figure 6 is particularly suitable for larger vehicles with large tyres due to having a more open configuration, the larger volume of air in large tyres requires a larger surface area of baffle to counter shock waves, the larger surface area reducing the force of impacts. As large tyres already have a large surface area, the positioning of the baffle liner further away from the inner liner allows for the movement of air due to an external impact but reduces the overall effect of the shock wave.

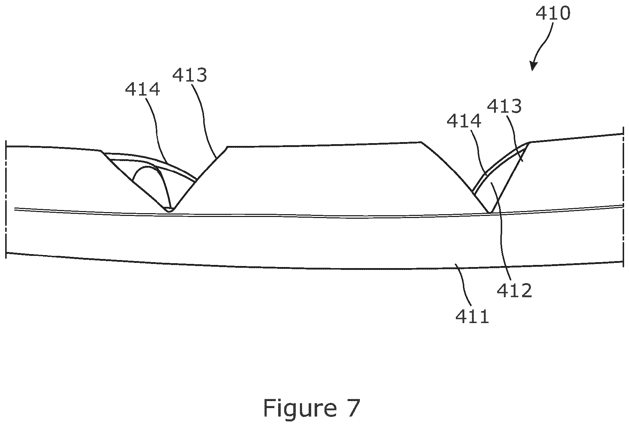

Figure 7 shows a schematical side view of a baffle liner 410 according to a fifth embodiment. The baffle liner 410 is a tube which extends around the circumference of the tyre and comprises a base 411 which is intended to be adhered to the inner liner 7. The baffle liner 410 comprises an air cavity 412 in its interior. The baffle liner 410 further comprises periodic V-shaped incisions 413 such that the baffle liner 410 comprises a plurality of openings 414. It is to be appreciated that other shaped incisions that provided the baffle liner 410 with openings 414 are intended within the scope of the present invention.

The baffle liner 410 of Figure 7 is prevented from flattening against the inner liner 7 by selecting a sufficiently rigid material for the baffle liner 410 or by thickening the baffle liner 410 adjacent to the base 411 where it is adhered to the inner liner.

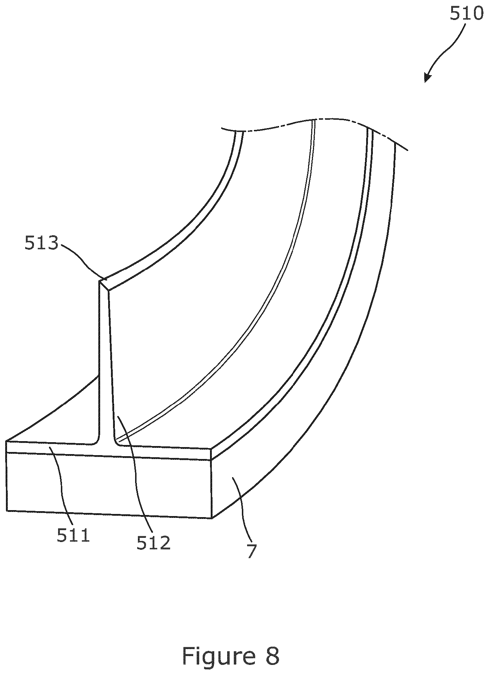

Figure 8 shows a schematic perspective view of a cross section of a baffle liner 510 according to a fifth embodiment attached to the inner liner 7. The baffle liner 510 comprises a base 511 and a flexible sheet of material 512 extending from the base 511 centripetally towards the interior of the tyre. In the embodiment shown in Figure 8, there is a flexible sheet of material 512 extending around the entire circumference in the inner liner 7, but it is to be appreciated that in other embodiments there may be multiple sheets of material which do not extend around the entirety of the circumference of the inner liner 7. It is also to be appreciated that the base of the flexible sheet of material 512 may be adhered directly to the inner liner 7 without the need for a base 511.

The flexible sheet 512 may be provided with a flexible ridge 513 which adhered to and located at the end of the flexible sheet of material 512 opposite from the end adjacent to the inner liner 7. The ridge 513 may be less flexible and stronger than the flexible sheet of material 512, and the flexible sheet of material 512 may be provided with reinforcing strands along its side faces to provide structural rigidity to the flexible sheet of material and the ridge 513.

The embodiment shown in Figure 8 can be provided as a uniform piece of material and hence can advantageously be incorporated in the final vulcanising process of the tyre and incorporated into the press mould. The embodiment shown in Figure 8 is more suitable for narrower tyres.

In alternative embodiments, the vents may comprise a vent hole and a reinforcing strip around the vent hole. The vent hole may be a slit or may be slightly wider than a slit. The reinforcing strip is intended to be a panel or patch of any other material mechanically or otherwise attached in the region of the vent hole to strengthen the region of the vent hole such that the vent hole is not damaged by repeated use.

The vents may further comprise a secondary reinforcing strip located at the boundary/edges between the vent and the surrounding sheet of material. The secondary reinforcing strip is intended to be a panel or patch of any other material mechanically or otherwise attached at the boundary/edges between the vent and the surrounding sheet of material, such that the vents are secured to the sheet of material for a prolonged period of time.

In preferred embodiment, the baffle liners are constructed of a high tensile, lightweight fabric material, such as Kevlar, rubberised canvas or a flexible polyethylene material. The material used for the baffle liner preferably has a high tear strength and must be able to be attached by adhesive to the inner baffle liner of tyres.

It is intended that the baffle liners previously described be used in a pneumatic tyre for either car or bicycle tyres. The way in which the baffle liner of the present invention reduces the effects of a shock event in a pneumatic tyre will now be described.

When a vehicle tyre encounters a road surface which distorts the natural and designed shape of the tyre (a circle), energy in the form of shock waves opposes the forward propulsion of the vehicle, acts upon the tyres and subsequently opposes the efficient movement of the vehicle. Shockwaves acting on a tyre and vehicle wheel are transmitted centripetally from all sides of the wheels towards the centre of the wheel. When in motion, such energy waves are continuously acting on the wheels of a motor vehicle. Overall, this energy acts against the forward propulsion of the vehicle and increases friction within the tyre, with an associated increase in temperature of air within the tyre. However, when the tyres of vehicles encounter rough surfaces, for example potholes, stones or debris, the pressure exerted by the external object causes shockwaves within the airspace of tyres. At the point of impact, sudden and violent shockwaves can change the nature of the air within the tyre, from a gas which can be compressed, to a gas which now acts like a solid which cannot be compressed. At this point of non-compressibility, the tyre loses its pneumatic suspension abilities and acts like a solid tyre. With the momentary change of the property of the air from that of a gas to that of a solid, for a split second, the air in the tyre loses its ability to provide the cushioning effect required of an effective pneumatic suspension system and instead acts like a bouncing ball, being incompressible and moving in a manner which is not under control. When encountered in rapid succession, such rapid deformations of the tyre make handling of the vehicle difficult, especially when cornering, as the bouncing ball effect continues, and the compressibility does not return to normal until the tyre has settled to its point of equilibrium. When such deformations occur at a speed which prevents the tyre to grip the road surface effectively, a vehicle becomes out of control.

When a pneumatic tyre encounters a road surface which is not completely smooth, at low pressures, the tyre deforms around the object allowing the wheel to travel over the object without increasing vertical movement. At higher pressures, if an object is encountered, the tyre will not deform but will roll and then bounce over the object. When the tyre bounces, grip is lost, and forward motion interrupted. At this point of impact on the tyre, air pressure within the tyre increases proportional to the force applied, with higher forces being applied from larger objects and/or higher speeds. As well as a radial shockwave being generated as outlined above, the rapid increase in air pressure causes a pressure wave along the sides of the tube, the highest pressures being closest to the impact point with energy gradually being dissipated further along the tube/tyre. If the tyre experiences a very high impact (large object and/or high speed) the air will move fast enough around the tube shape of the tyre to generate a piston effect which will form a pressure barrier between the high-pressure air near the impact point and the lower pressure air in the remainder of the tyre. In the tyre, such a pressure barrier will cause pockets of air, with a very high-pressure pocket and a lower pocket of air, the pressure differential causing instability to the handling abilities of the vehicle.

The baffle liner of the present invention overcomes the problem of shock waves by providing a baffle liner within the airspace of the tyre, which comprise a surface feature which prevents the shock waves from travelling centripetally as the air has to travel in a different path to travel centripetally, which dissipates and diffuses the wave energy. Further, any movement of the surface feature of the baffle liner can counter and/or disrupt shockwaves and assists in dissipating wave energy.

In the embodiment shown in Figure 7, the movement of air through the tube and out the openings 414 dissipates and diffuses the wave energy.

In the embodiment shown in Figure 8, wave energy is dissipated by the flexible sheet of material 512 which can move (or flip) from side to side when an external force is encountered.

In embodiments with vents, the movement of the air through the vents further dissipates and diffuses more of the wave energy.

As a result, the tyres have less rolling resistance because the pneumatic suspension effects of the tyre work effectively, and the vehicle subsequently has a greater range per unit of energy.

The vents will only be activated when there is an increase in pressure from outside the tyre e.g., when the tyre rolls over a stone or rupture in the road surface. The amount of air being emitted from the vent and diffused within the air space of the tyre will be directly proportional to the increase in pressure of the external pressure and so large holes on the baffles will activate more frequently to diffuse lower impact forces, and with the smaller vents activated when the worst road conditions are encountered and the greatest forces are applied to the external surface of the tyres. The aim of the present invention is for the different elements of the baffle liner to encourage air circulation, reduce temperature build-up and reduce the chances of the air within the tyre becoming incompressible from a heavy shockwave.

Furthermore, the use of vents enables the tyres to be run at higher pressures and also mitigates the effects of pressure spikes. Due to the diffusion of pressure spikes within the tyre air space, the pressure distribution throughout the tyre is more even and the effects of road irregularities are mitigated. Higher running pressures for tyres reduce rolling resistance and so increase energy efficiency. In this way, wider but higher-pressure tyres can be used allowing for increased grip and better cornering abilities but with lower drag. As the baffle liner acts as a self-regulating system, with external forces being counteracted by the internal movements of air within the tyre airspace, when tyres are kept at higher pressures, even with an increase in the load of the vehicle, the suspension properties of the tyres will be able to handle road surface distortions and the lateral stresses of cornering.

There is an increase in the speed of the gas (air) inside the tyre at the point of impact, causing a reduction in pressure at that point. By using a baffle liner, the *overall* surface area of the inside of the tyre is increased, moderating the loss of pressure at the point of impact as the force is reduced by the overall increase in surface area. With the inclusion of vents within the Baffle Liner, the air which is forced away from the point of impact is modulated, the initial shockwave caused by impact being diffused so that the primary wave is broken up before it fully enters the tyre air space and secondary waves being prevented from forming due to the flexible nature of the baffle liner and the subsequent counter movements of the baffle liner.

Therefore, the baffle liners will enable tyres to be run at higher pressure whilst providing the more controlled handling characteristics of tyres which have lower pressure but higher rolling resistance.

Moreover, by using baffles within the tyre air space, overall travel noise and vibration should be reduced.

It is intended that the baffle liner is fitted at the end of the tyre fabrication process, after vulcanisation of the tyre has taken place.

## Claims

1. A baffle liner for attachment to an inner liner of a tyre, the baffle liner comprising at least one sheet of material, and at least one surface formation, whereby the at least one surface formation is configured to reduce the effects of a shock event external to the tyre by dissipating shockwaves produced by the shock event and by modulating air pressure spikes at the point of impact.

2. A baffle liner according to claim 1, wherein the sheet of material comprises two primary adhesion regions extending circumferentially along the inner liner, wherein the primary adhesion regions are configured to adhere the sheet of material to the inner liner.

3. A baffle liner according to claim 2, wherein the sheet of material comprises at least one secondary adhesion region extending between the primary adhesion regions, whereby the secondary adhesion regions are configured to adhere the sheet of material to the inner liner, such that at least one panel is defined between the primary and secondary adhesion regions.

4. A baffle liner according to claim 3, whereby the at least one surface formation is at least one vent located on the at least one panel.

5. A baffle liner according to claim 4, wherein the at least one panel comprises a first side vent located adjacent to a first primary adhesion region and a second side vent located adjacent to a second primary adhesion region, and wherein the panel comprises the at least one vent in a region defined between the first and second side vent.

6. A baffle liner according claim 1 or claim 2, wherein the sheet of material comprises at least one blister, whereby the at least one blister comprises a casing defining a cavity protruding radially inwards from the inner liner, and whereby the at least one surface formation is at least one vent located on the casing and optionally, wherein the sheet of material surrounding the at least one blister is adhered to the inner liner.

7. A baffle liner according to claim 6, wherein the at least one blister comprises a reinforcing region located at a boundary between the casing and the sheet of material adhered to the inner liner.

8. A baffle liner according to claim 6 or claim 7, wherein the baffle liner comprises a plurality of blisters, and the plurality blisters are arranged such that they are spaced from adjacent blisters along a direction defined by the circumference of the inner liner.

9. A baffle liner according to claim 1, wherein the baffle liner comprises at least two sheets of material, and wherein each sheet of material comprises at least three adhesion points configured to adhere the sheet of material to the inner liner, and whereby the at least one surface features are apertures defined between the sheets of material.

10. A baffle liner according to claim 9, wherein the sheet of material comprises a trailing edge and a leading edge opposite to and spaced apart from the trailing edge along a direction defined by the circumference of the inner liner, and whereby the trailing edge of the sheet of material overlaps with the leading edge of the adjacent sheet of material.

11. A baffle liner according to claim 9, wherein the at least one surface features are vents located in the sheet of material.

12. A baffle liner according to any of claims 4 to 8 or 11, wherein the sheet of material comprises a plurality of vents, and wherein the plurality of vents are arranged in an irregular array.

13. A baffle liner according to any of claims 4 to 8 or 11, wherein the sheet of material comprises a plurality of vents, and wherein the plurality of vents are differently sized.

14. A baffle liner according to claim 1, wherein the sheet of material is in the form of a tube, whereby the at least one surface features are incisions in the tube.

15. A baffle liner according to claim 1, whereby the at least one surface features is in the form of a flexible sheet extending centripetally towards the centre of the tyre.
